## Europäisches Patentamt

## European Patent Office

## Office européen des brevets

(11) Veröffentlichungsnummer: **0 085 956**
**A2**

(12) **EUROPÄISCHE PATENTANMELDUNG**

(21) Anmeldenummer: **83101026.9**

(22) Anmeldetag: **03.02.83**

(51) Int. Cl.³: **G 02 B 7/26**

(30) Priorität: **05.02.82 DE 3203929**

(43) Veröffentlichungstag der Anmeldung:
**17.08.83 Patentblatt 83/33**

(84) Benannte Vertragsstaaten:
**AT BE CH DE FR GB IT LI NL SE**

(71) Anmelder: **SIEMENS AKTIENGESELLSCHAFT**
**Berlin und München Wittelsbacherplatz 2**
**D-8000 München 2(DE)**

(72) Erfinder: **Störk, Peter**
**Am Lindenberg 143**
**D-8134 Pöcking(DE)**

(72) Erfinder: **Thom, Günter**
**Untertaxetweg 6**
**D-8035 Gauting(DE)**

(54) **Lösbare Kupplung für Lichtleiter.**

(57) Die Erfindung bezweckt, eine aus Spritzgußteilen gefertigte Kupplung zu schaffen, bei der keine Zentriervorgänge erforderlich sind. Die beiden Lichtleiterenden (5) sind im gekoppelten Zustand in eine gemeinsame Längsrille gedrückt und somit aufeinander ausgerichtet. Sie sind an einem Halteteil befestigt, das seitlich federnd auslenkbar ist und die Längsrille überlappt. Dadurch ist eine selbsttätige Zentriermöglichkeit beim Zusammenfügen der Kupplungsteile gegeben.

FIG 1

EP 0 085 956 A2

SIEMENS AKTIENGESELLSCHAFT          Unser Zeichen
Berlin und München                  VPA
                                    82 P 1 0 6 8 E

Lösbare Kupplung für Lichtleiter

Die Erfindung bezieht sich auf eine lösbare Kupplung für Lichtleiter, deren Enden im gekoppelten Zustand in einer gemeinsamen Längsrille fluchtend einliegen, die in einer Auflagefläche eines ersten Kupplungsteiles eingelassen ist.

Eine derartige Kupplung ist z.B. durch die deutsche Offenlegungsschrift 28 03 570 bekannt geworden. Danach ist in einen Grundkörper eines Gerätesteckers für Lichtleiter eine V-Nut eingelassen, aus der im Koppelbereich die Lichtleiter herausragen. In diesem Bereich werden die beiden aneinanderstoßenden Lichtleiterenden durch einen federnden Druckkörper in den Nutgrund gedrückt, so daß sich ein gesonderter Zentriervorgang erübrigt. Eine derartige Anordnung bedingt aber, daß die Lichtleiterenden aus den ihnen jeweils zugeordneten Steckerteilen herausragen müssen, damit sie der Druckkörper erfassen kann. Dies bringt aber die Gefahr mit sich, daß beim Stecken die herausragenden, ungeschützten, empfindlichen Lichtleiterenden beschädigt werden. Insbesondere wenn eine hohe Anzahl von Steckvorgängen gefordert ist, muß mit einer Beschädigung oder Abnützung der Faser, aber auch der Nut oder des Druckkörpers gerechnet werden.

Der Erfindung liegt die Aufgabe zugrunde, eine lösbare Kupplung für Lichtleiter zu schaffen, bei der die Gefahr der Beschädigung der Lichtleiterenden beim Zusammenfügen der Kupplungsteile verringert ist.

Diese Aufgabe wird durch die Erfindung gemäß Anspruch 1

Khr 1 Gru / 28.01.1982

0085956

gelöst. Die Erfindung ermöglicht es, das Lichtleiterende über seine volle Länge an dem Halteteil zu befestigen. Damit ist es beim Einfädeln in die Längsrille gegen Verbiegen geschützt, was die Bruchgefahr verringert. Durch die seitliche Beweglichkeit des Halteteiles kann sich das Lichtleiterende dennoch genau in der Längsrille zentrieren. Das Lichtleiterende kann z.B. durch Kleben an dem Halteteil festgelegt sein. Um das Lichtleiterende federnd in den Grund der Längsrille drücken zu können braucht man nun nur noch einen entsprechenden Druck auf das Halteteil auszuüben wodurch sich die Beschädigungsgefahr für die Lichtleiterfaser ebenfalls verringert.

Vorteilhafte Weiterbildungen der Erfindung sind in den Ansprüchen 2 bis 20 gekennzeichnet:

Durch die Ausbildung einer Längsnut am Halteteil ist es möglich, das Lichtleiterende in dieser ohne Justieraufwand z.B. durch Kleben zu fixieren. Damit ist das Lichtleiterende gegenüber der Längsrille des anderen Kupplungsteiles bereits so genau vorzentriert, daß es beim Zusammenstecken der Kupplungsteile ohne zusätzliche Einwirkung von außen in die gemeinsame Längsrille einrastet.

Die Weiterbildung nach Anspruch 3 ermöglicht in einfacher Weise die seitliche Beweglichkeit des Halteteiles, ohne daß auf eine genaue Vorzentrierung des Lichtleiterendes verzichtet werden muß.

Durch die Weiterbildung nach Anspruch 4 kann das Lichtleiterende achsparallel ausgelenkt werden. Dadurch wird ein Kippen des Lichtleiterendes vermieden. Ein solches Kippen käme zustande, wenn sich die Biegeachse senkrecht zum Lichtleiter erstrecken würde. Der Begriff Biegeachse ist dabei so zu verstehen, als ob anstelle des Steges in dessen Bereich ein Scharnier angeordnet wäre, dessen Drehachse der Biegeachse entspricht. Es ist fertigungstechnisch zweckmäßig, das Halteteil mit dem Steg einstückig zu verbinden. Damit stellen sich Steg und Halteteil als ein Körper dar, dessen den Lichtleiter tragendes Ende als Halteteil fungiert.

Die Weiterbildung nach Anspruch 5 ermöglicht ein achsparalleles Auslenken des Lichtleiterendes senkrecht zur Auflagefläche, in die die Längsrille eingelassen ist. Dadurch
kann das bewegliche Lichtleiterende unter Vorspannung in
der Längsrille einliegen, so daß sie exakt in ihrer gewünschten Lage fixiert ist. Durch die Auslenkbarkeit des
Halteteiles senkrecht zur Auflagefläche ist es außerdem
möglich, das Lichtleiterende anzuheben und in der Endphase des Steckvorganges in die Längsrille abzusenken. Dadurch werden Reibung, Verschleiß und Beschädigung des
Lichtleiterendes beim Stecken weitgehend vermieden. Durch
die symmetrische Ausgestaltung der Stege nach Anspruch 6
wird vermieden, daß das Halteteil beim Anheben einem
seitlichen Versatz unterliegt.

Durch die federnde Lagerung des Halteteiles in der Längsrichtung nach Anspruch 7 ist es möglich, daß das Halteteil entsprechend unter Vorspannung an dem ersten Kuplungsteil anliegt. Dadurch wird eine sichere Zuordnung
des Halteteiles zum ersten Kupplungsteil unabhängig von
Fertigungstoleranzen und von der Einwirkung äußerer Kräfte auf den Stecker ermöglicht. Die Federwirkung läßt sich
in einfacher Weise durch die Weiterbildung nach Anspruch
8 realisieren. Durch die Weiterbildung nach Anspruch 9
wird erreicht, daß das Halteteil in seiner Lage gegenüber dem anderen Kupplungsteil auch bei der Einwirkung
von äußeren Kräften auf den Stecker genau fixiert bleibt
ohne daß die seitliche Beweglichkeit des Halteteiles
durch Reibungskräfte beeinträchtigt wird, die bei direkter Anlage an den entsprechenden Gegenflächen auftreten würden. Dies wird z.B. durch die Weiterbildung nach Anspruch 10 sichergestellt.

Die Weiterbildung nach Anspruch 11 ermöglicht es, das gesamte Führungsstück federnd zu lagern.

Durch die Weiterbildung nach Anspruch 12 wird das Führungsstück und damit das Halteteil beim Zusammenstecken der beiden Kupplungsteile zunächst gegenüber der Auflagefläche angehoben und in der Endphase des Steckvorganges abgesenkt. Damit bedarf es zu diesem Zweck keiner unmittelbaren Einwirkung auf das Halteteil, so daß dessen seitliche Auslenkbarkeit nicht beeinträchtigt wird.

Durch die Weiterbildung nach Anspruch 13 wird die Winkellage des Halteteiles gegenüber dem ersten Kupplungsteil gesichert, was eine knickfreie Fluchtung der beiden Lichtleiterenden ermöglicht.

Durch die Weiterbildung nach Anspruch 14 können in einfacher Weise und ohne erheblichen Mehraufwand mehrere Lichtleiter miteinander verbunden werden. Durch den engen Achsabstand können Abstandsabweichungen zwischen den Längsrillen und Längsnuten sehr gering gehalten werden.

Durch die Weiterbildung nach Anspruch 15 ist es möglich, das auslenkbare Lichtleiterende schaltbar mit dem anderen Lichtleiterende zu koppeln oder zu entkoppeln. Es ist auch möglich, durch Belegung benachbarter Längsrillen mit festliegenden Lichtleitern einen Umschalter zu bilden. In jedem der beiden Schaltzustände ist der auslenkbare Lichtleiter infolge der senkrecht zur Auflagefläche wirkenden Andruckkraft verrastet, wodurch der Schalter bistabil ausgebildet werden kann. Das Schalten erfolgt zweckmäßig durch äußere Einwirkung auf das Führungsstück und das Halteteil. Dabei wird das Führungsstück zunächst angeho-

O O 8 5 9 5 6

ben, sodann das Halteteil seitlich ausgelenkt und zusammen mit dem Führungsstück abgesenkt. Eine solche Kombination aus Stecker und Schalter ist besonders vorteilhaft, weil ein Schalter in der Regel ohnehin mit Steckanschlüssen auszubilden ist. Bei einem Schalter üblicher Bauweise benötigt man dazu für die beiden Lichtleiter je eine Steckverbindung, wodurch sich der Herstellungsaufwand vervielfacht.

Die Weiterbildung nach Anspruch 16 läßt sich mit geringem Fertigungsaufwand verwirklichen. Das Zusammenstecken der Kupplungsteile erfordert einen geringen Bedienungsaufwand. Bei einer bloßen Rastverbindung können sich im Gegensatz zu einer stabilen Schraubverbindung äußere Kräfte auf die Lage der Kupplungsteile zueinander auswirken. Diese Auswirkungen werden jedoch durch die federnde Lagerung des Halteteiles kompensiert.

Durch die Weiterbildung nach Anspruch 17 können die beiden Lichtleiterenden an zwei gleichen Kupplungsteilen fixiert werden. Das mittlere Kupplungsteil dient lediglich zur Aufnahme und zum Zusammenhalten dieser beiden Kupplungsteile sowie zur gegenseitigen Ausrichtung der beiden Lichtleiterenden in der gemeinsamen Längsrille. Das mittlere buchsenartige Kupplungsteil ist somit symmetrisch ausgebildet. Indem die Längsrillen von beiden Seiten her durch die beiden Halteteile überlappt werden, können sie als einfache durchgehende geradlinige gut zugängliche Ausnehmungen ausgebildet werden. Das gleiche gilt für die Halteteile mit den Längsnuten. Wegen der guten Zugänglichkeit der Längsnuten und der Längsrillen sowie wegen der Selbstzentrierung in den Längsrillen können alle Kupplungsteile im Spritzgußverfahren aus Kunststoff geformt werden. Nach dem Festlegen der Lichtleiterenden in den Längsnuten können die Kupplungsteile ohne Justiervorgang zusammengesteckt werden.

0085956

Die Weiterbildung nach Anspruch 18 ermöglicht ein sicheres Einlegen der Lichtleiter in den Längsrillen bzw.
Längsnuten. Durchmesserunterschiede bei den Lichtleitern
bewirken einen geringeren Versatz als bei keilförmig eingelassenen Rillen bzw. Nuten.

Durch die Weiterbildung nach Anspruch 19 erfolgt eine unmittelbare und daher sehr genaue Zuordnung des Führungsstückes zu dem die Längsrillen tragenden Block des hülsenartigen Kupplungsteiles.

Durch die Weiterbildung nach Anspruch 20 lassen sich die
Vorteile des reibungsfreien und selbstzentrierenden Einlegens des Lichtleiterendes in die Längsrille auf das optische Anschalten an z.B. eine Sendediode übertragen.

Im folgenden wird die Erfindung anhand eines in der Zeichnung dargestellten Ausführungsbeispieles näher erläutert. Die dargestellten

Fig. 1 und 2 zeigen in perspektivischer schematisierter Darstellung zwei Kupplungsteile vor dem Zusammensetzen mit einem Lichtleiterende, das mit einem anderen, nicht dargestellten Lichtleiterende optisch verbunden werden soll,

Fig. 3 zeigt einen teilweisen Längsschnitt durch die beiden Kupplungsteile im Bereich der Kupplungsstelle für die beiden Lichtleiter nach dem Zusammenbau.

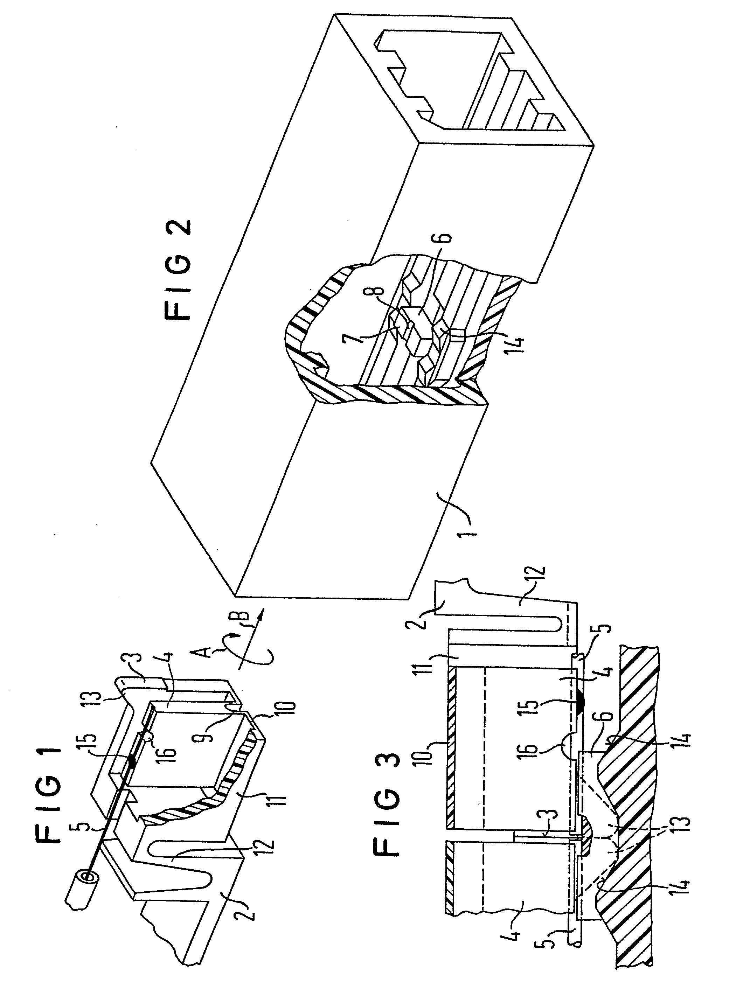

Nach den Fig. 1 und 2 ist ein erstes Kupplungsteil 1 hülsenartig ausgebildet. Ein zweites Kupplungsteil 2 ist der günstigeren Darstellung wegen zum ersten Kupplungsteil 1 um 180° entsprechend dem Pfeil A verdreht dargestellt. Das zweite Kupplungsteil 2 weist ein Halteteil 4 auf, das mit einer Längsnut versehen ist, in der das Lichtleiterende 5 z.B. durch Kleben fixiert ist.

In der Mitte des ersten Kupplungsteiles 1 ist ein klotzartiger in das Innere des Kupplungsteiles ragender Auflageblock 6 angeordnet. Dieser weist eine Auflagefläche 7 auf, die mit einer Längsrille 8 versehen ist. Die Längsrille 8 und die Längsnut in dem Halteteil 4 sind im Querschnitt so bemessen, daß sie im zusammengesteckten Zustand jeweils die Hälfte des Lichtleiters 5 umgreifen. Im zusammengefügten Zustand der beiden Kupplungsteile überlappt das Halteteil 4 mit seiner das Lichtleiterende 5 aufnehmenden Fläche die Auflagefläche 7 etwa bis zur Mitte. Dabei zentriert sich das Lichtleiterende 5 in der Längsrille 8. In gleicher Weise zentriert sich das andere nicht dargestellte Lichtleiterende in der Längsrille 8. Das Halteteil 4 ist über zwei dünne Stege 9 mit zwei Längsstegen verbunden. Die Stege erstrecken sich parallel zum Lichtleiterende, so daß das in Richtung dieses Lichtleiterendes frei ragende Halteteil achsparallel seitlich federnd ausgelenkt werden kann. Die dünnen Längsstege 10 erstrecken sich ebenfalls parallel zum Lichtleiterende, jedoch quer zu den Stegen 9. Sie ermöglichen somit eine federnde Nachgiebigkeit des Halteteiles 4 ebenfalls achsparallel, jedoch senkrecht zur seitlichen Auslenkung. Die Längsstege 10 sind an einem gabelartigen Führungsstück 11 befestigt, das sich zu beiden Seiten des Halteteiles 4 erstreckt. Das Führungsstück 11 ist über einen sich senkrecht zum Lichtleiterende 5 erstreckenden Quersteg 12 mit dem Kupplungsteil 2 verbunden. Dieser Quersteg 12 ermöglicht eine axiale Nachgiebigkeit des Führungsstückes 11 mit dem Halteteil 4. Das Führungsstück 11 ist auf seiner dem Lichtleiterende zugewandten Seite mit nockenartigen Vorsprüngen 13 versehen. Diese gleiten beim Zusammenstekken der Kupplungsteile über entsprechende Auflaufschrägen im hülsenartigen Kupplungsteil 1. Dadurch wird das Führungsstück 11 mit dem Halteteil 4 angehoben und in der Endphase des Steckvorganges wieder abgesenkt. Das Lichtleiterende 5 wird daher beim Zusammenstecken nicht longitudinal sondern transversal in die Längsrille 8 eingeführt. Dabei zentriert sich das Halteteil 4 mit dem Lichtleiterende 5 infolge der seitlichen Nachgiebigkeit von selbst in der Längsrille 8. Die Längsstege 10 ermöglichen es, daß das Lichtleiterende 5 im gekoppelten Zustand unter Spannung in den Grund der Längsrille 8 gedrückt wird. Der Quersteg 12 ermöglicht es, das Führungsstück 11 mit seinen Anschlagflächen 3 unter Vorspannung gegen die entsprechenden Gegenanschlagflächen zu drücken und somit in seiner axialen Lage zu sichern. Das Führungsstück ist mit seinen Vorsprüngen 13 so bemessen, daß es im abgesenkten Zustand eine achsparallele Lage des Halteteiles 4 gewährleistet. Der Abstand zwischen den Erhebungen 13 ist so bemessen, daß sie den Auflageblock 7 seitlich umgreifen.

In Fig. 3 sind die Verhältnisse im Bereich der Stoßstelle

0085956

genauer dargestellt. Die beiden Lichtleiterenden 5 sind in den Längsnuten der Halteteile 4 durch Klebstoff 15 befestigt. Querrillen 16 im Halteteil 4 verhindern beim Kleben das Fließen des Klebstoffes in den Bereich, in dem sich die Faser in den Längsrillen des Auflageblockes 6 zentriert. Die Anschlagflächen 3 der beiden Kupplungsteile 2 stoßen in Höhe der Kopplungsstelle unter axialer Vorspannung aneinander. Die Stirnseiten der Lichtleiterenden 5 sind gegenüber diesen Auflageflächen um ein geringes Maß zurückgesetzt und überragen ebenfalls um ein geringes Maß die noch weiter zurückgesetzten Stirnseiten der Halteteile 4. Dadurch ist gewährleistet, daß zwischen den Halteteilen 4 und den Lichtleiterenden 5 ein Zentriervorgang keine Reibung entsteht, die die Beweglichkeit der Halteteile 4 beeinträchtigen könnte.

20 Patentansprüche
3 Figuren

**0085956**

<u>Patentansprüche</u>

1. Lösbare Kupplung für Lichtleiter, deren Enden im gekoppelten Zustand in einer gemeinsamen Längsrille fluchtend einliegen, die in einer Auflagefläche eines ersten Kupplungsteiles eingelassen ist, d a d u r c h  g e - k e n n z e i c h n e t , daß zumindest eines der beiden Lichtleiterenden (5) an einem Halteteil (4) befestigt ist, das in einem zweiten Kupplungsteil (2) zum Lichtleiterende (5) transversal beweglich gelagert ist und mit seinem Lichtleiterende (5) federnd gegen den Grund der Längsrille (8) gedrückt ist.

2. Kupplung nach Anspruch 1, d a d u r c h  g e k e n n - z e i c h n e t , daß das Halteteil (4) zumindest eine zur Auflagefläche (7) hin offene Längsnut (8) aufweist, in der das Lichtleiterende (5) gehalten ist, daß die Längsnut (8) so bemessen ist, daß der Lichtleiter mit mehr als halber Dicke herausragt und daß das Halteteil (4) das Lichtleiterende (5) bis in den Bereich von dessen Stirnseite überdeckt.

3. Kupplung nach Anspruch 1 oder 2, d a d u r c h  g e - k e n n z e i c h n e t , daß das Halteteil (4) an seinem Kupplungsteil (2) über zumindest einen biegsamen Steg (9) befestigt und gegenüber diesem federnd auslenkbar ist.

4. Kupplung nach Anspruch 3, d a d u r c h  g e k e n n - z e i c h n e t , daß sich der Steg (9) in Längsrichtung des Lichtleiterendes erstreckt und daß die Biegeachse parallel zum Lichtleiterende (5) über der offenen Seite der Längsrille (8) angeordnet ist.

5. Kupplung nach Anspruch 4, d a d u r c h  g e k e n n - z e i c h n e t , daß der Steg (9) an zumindest einem zu diesem im wesentlichen senkrecht stehenden biegsamen Längssteg (10) befestigt ist, dessen Biegeachse ebenfalls parallel zur Längsrille (8), aber seitlich zu dieser angeordnet ist.

6. Kupplung nach Anspruch 5, d a d u r c h  g e k e n n - z e i c h n e t , daß die Stege (9) mit den Längsstegen (10) im Querschnitt bezüglich der Lichtleiterachse symmetrisch angeordnet sind.

7. Kupplung nach einem der vorhergehenden Ansprüche, d a - d u r c h  g e k e n n z e i c h n e t , daß das Halteteil (4) in der Erstreckungsrichtung der Längsrille (8) gegenüber dem zweiten Steckerteil (2) federnd gelagert ist.

8. Kupplung nach Anspruch 7, d a d u r c h  g e k e n n - z e i c h n e t , daß zwischen dem Halteteil (4) und seinem Steckerteil (2) zumindest ein federnder Quersteg (12) angeordnet ist, dessen Biegeachse senkrecht zur Längsrille (8) verläuft.

9. Kupplung nach Anspruch 8, d a d u r c h  g e k e n n - z e i c h n e t , daß der Steg (9) mit dem Längssteg (10) in einem Führungsstück (11) gelagert ist, das im gekoppelten Zustand in dem ersten Kupplungsteil (1) geführt ist und mit zumindest einer Anschlagfläche (3) federnd gegen eine entsprechende Gegenanschlagfläche des ersten oder eines dritten Kupplungsteiles (2) gedrückt ist und daß das Halteteil (4) gegenüber diesem einen geringen stirnseitigen Abstand aufweist.

10. Kupplung nach Anspruch 9, d a d u r c h  g e k e n n - z e i c h n e t , daß das Lichtleiterende (5) und das Halteteil (4) um ein geringes Maß gegenüber den Anschlagflächen (3) zurückgesetzt sind.

11. Kupplung nach einem der Ansprüche 8, 9 oder 10, d a - d u r c h  g e k e n n z e i c h n e t , daß der Quersteg (12) zwischen dem Führungsstück (11) und dem zweiten Steckerteil (2) angeordnet und in sich zurückgekrümmt ausgebildet ist.

12. Kupplung nach einem der Ansprüche 9, 10 oder 11, d a - d u r c h  g e k e n n z e i c h n e t , daß das Führungsstück (11) und das zweite Kupplungsteil (2) mit wechselseitig angeordneten, senkrecht zur Auflagefläche (7) ragenden, nockenartigen Erhebungen (13) und entsprechenden Auflaufschrägen (14) versehen sind.

13. Kupplung nach Anspruch 12, d a d u r c h  g e k en n- z e i c h n e t , daß das Führungsstück (11) im gekoppelten Zustand im ersten Kupplungsteil (1) spielfrei fixiert ist.

14. Kupplung nach einem der vorhergehenden Ansprüche, d a d u r c h  g e k e n n z e i c h n e t , daß im ersten und/oder zweiten Kupplungsteil mehrere parallel verlaufende Längsrillen bzw. Längsnuten zur Aufnahme von Lichtleitern mit engem Achsabstand angeordnet sind.

15. Kupplung nach Anspruch 14, d a d u r c h  g e k e n n - z e i c h n e t , daß das Halteteil transversal um mindestens einen Achsabstand elastisch auslenkbar ist.

16. Kupplung nach einem der vorhergehenden Ansprüche, d a d u r c h  g e k e n n z e i c h n e t , daß die beiden Kupplungsteile (1, 2) buchsenartig ineinandergesteckt und miteinander verrastet sind.

17. Kupplung nach einem der vorhergehenden Ansprüche, d a d u r c h  g e k e n n z e i c h n e t , daß das erste Kupplungsteil (1) mit den Längsrillen (8) zur Führung der beiden Lichtleiterenden (5) als gemeinsames Führungsteil für zwei gleiche, aus entgegengesetzter Richtung eingesteckte zweite Kupplungsteile (2) dient, die mit den Anschlagflächen (3) ihrer Führungsstücke (11) unmittelbar zusammenstoßen und mit ihren Lichtleiterenden (5) in der gemeinsamen Längsrille (8) einliegen.

18. Kupplung nach einem der vorhergehenden Ansprüche, d a d u r c h g e k e n n z e i c h n e t , daß die Längsrillen (8) und Längsnuten teilkreisförmig ausgebildet sind und daß der Radius geringfügig größer als der Lichtleiterradius ist.

19. Kupplung nach einem der vorhergehenden Ansprüche, d a d u r c h g e k e n n z e i c h n e t , daß die Längsrillen (8) in einem klotzartig ins Innere des hülsenartigen ersten Kupplungsteiles (1) ragenden Auflageblock (6) eingelassen sind und daß das Führungsstück (11) den Auflageblock (6) seitlich umgreift und sich an diesem seitlich zentriert.

20. Kupplung nach einem der vorhergehenden Ansprüche, d a d u r c h g e k e n n z e i c h n e t , daß an Stelle eines der beiden Lichtleiterenden ein optoelektrisches Koppelelement tritt, das in das erste Kupplungsteil eingesetzt und auf dessen Längsrille ausgerichtet ist.

FIG 1

FIG 2

FIG 3

1/1

0085956